Europäisches Patentamt

(19) European Patent Office

Office européen des brevets

(11) Publication number: **0 043 283**
**A2**

# (12) EUROPEAN PATENT APPLICATION

(21) Application number: **81302970.9**

(22) Date of filing: **30.06.81**

(51) Int. Cl.³: **G 01 F 9/00**
**G 01 F 9/02**

(30) Priority: **01.07.80 GB 8021443**

(43) Date of publication of application:
**06.01.82 Bulletin 82/1**

(84) Designated Contracting States:
**DE FR GB IT SE**

(71) Applicant: **Cashmore, Peter Roseby**
**Cherokee Woodhurst Park**
**Oxted Surrey(GB)**

(72) Inventor: **Rivers, Robert Leitch**
**Millbrook Woodhurst Park**
**Oxted Surrey(GB)**

(74) Representative: **Crawford, Andrew Birkby et al,**
**A.A. THORNTON & CO. Northumberland House 303-306**
**High Holborn**
**London WC1V 7LE(GB)**

(54) Monitoring fuel consumption of internal combustion engines.

(57) Fuel consumption of an internal combustion engine provided with fuel injection is monitored by means of a flow sensor 20 included in the fuel supply line 11 between tank 18 and fuel pump 10. The fuel return 14 from injector distributor 12 and/or injectors 13 is re-routed from the conventional path to the fuel tank 18 and instead joins the supply line 11 by means of a T-piece 15 between sensor 20 and pump 10. A radiator 30 is included in the fuel return line 14 for cooling recirculating fuel thereby preventing fuel vapour lock.

FIG. I.

EP 0 043 283 A2

- 1 -

Monitoring fuel consumption of internal combustion
Engines

The present invention relates to an arrangement for
monitoring the fuel consumption of internal combusion (i.c)
engines, and in particular of such engines provided with
fuel injection systems.

It has previously been proposed to provide a flow
sensor in the fuel line from the fuel tank to the
carburettor(s) of a conventional i.c. engine.  Such a
sensor will provide an indication of the fuel flow between
tank and engine, and may therefore be used to provide
a measure of the fuel consumption of the engine, for example
by generating flow related signals to suitable processing
equipment such as that described in co-pending European
Patent Application No. 80303783.7 (Publication No. 0029308)

A difficulty arises when it is desired to use a similar
arrangement for monitoring the fuel consumption of a fuel
injection engine.  The design of the fuel system in such
engines is such that a return path is always provided
back from the fuel regulation/ distribution apparatus
in the engine to the fuel tank.  This is due to the fact that
fuel injection systems are arranged to pump an excess of
fuel so as to ensure a constant pressure under all operating
conditions, the excess fuel being returned to the tank.  It
will be seen that simply providing a flow sensor in the
feed path from the fuel tank would produce grossly incorrect fuel consumption figures, as much of the fuel already considered to have been consumed would be continually returning to the tank for re-use.

One solution to this difficulty would be to provide a second flow sensor in the return path, and processing equipment capable of subtracting the return flow measure from the feed flow measure. This considerably increases the cost of the monitoring system, both in view of the need to provide two flow sensors and due to the increased complexity demanded of the processing equipment.

Furthermore, if an instantaneous fuel consumption reading is to be provided by this arrangement utilising two flow sensors, under certain circumstances an overall zero reading will be provided if the return path flow at the moment of monitoring equals the feed flow. In fact even a negative reading can sometimes result if the return path flow should momentarily exceed the feed flow. It is thus not readily possible to provide an instantaneous reading using this arrangement.

The present invention provides a fuel injection system for an internal combustion engine provided with means for monitoring the fuel consumption thereof, comprising a fuel tank for storing fuel, at least one fuel injector for injecting fuel into a respective cylinder of the engine, a distributing means for supplying fuel to the fuel injector at a predetermined point in the cycle of the engine, a fuel pump for pumping fuel along a fuel feed path from the fuel tank to the distributing means, and a fuel return path for returning excess fuel from at least the distributing means, characterised in that a flow sensor is provided in the fuel feed path between the fuel tank and the fuel pump for providing an indication of fuel flow, in that the fuel return path rejoins the fuel feed path between the flow sensor and the fuel pump, and in that a cooling means is provided in the fuel return path, whereby cooled excess fuel is returned to the fuel feed path downstream of the flow sensor.

Accordingly, the re-routing of the fuel return path, causing it to return excess fuel into the feed path between sensor and pump, ensures that all fuel passing through the sensor will be used by the engine and therefore. meaningful readings can be obtained from a single sensor.

If a direct connection is made from the return outlets of the distributing means and/or injectors by means of conventional fuel piping into the fuel feed path by means of a T-piece or the like, it is found that, under certain conditions such as idling of the engine, fuel vapour lock will occur. This arises because under these conditions, a large proportion of the fuel is being continuously circulated around the feed path, return path and feed path again, only a small proportion actually being consumed by the engine. The temperature of the fuel is then found to rise until vapour lock occurs. This problem is overcome by the provision of the cooling means, preferably in the form of a radiator, or heat exchanger being included in the fuel return path.

In order that the present invention may be more readily understood, embodiments thereof will now be described, by way of example, with reference to the accompanying drawings, in which:-

Figure 1 is a schematic diagram of a fuel system in accordance with one embodiment of the invention; and

Figure 2 is a schematic diagram similar to that of Figure 1 but showing another embodiment.

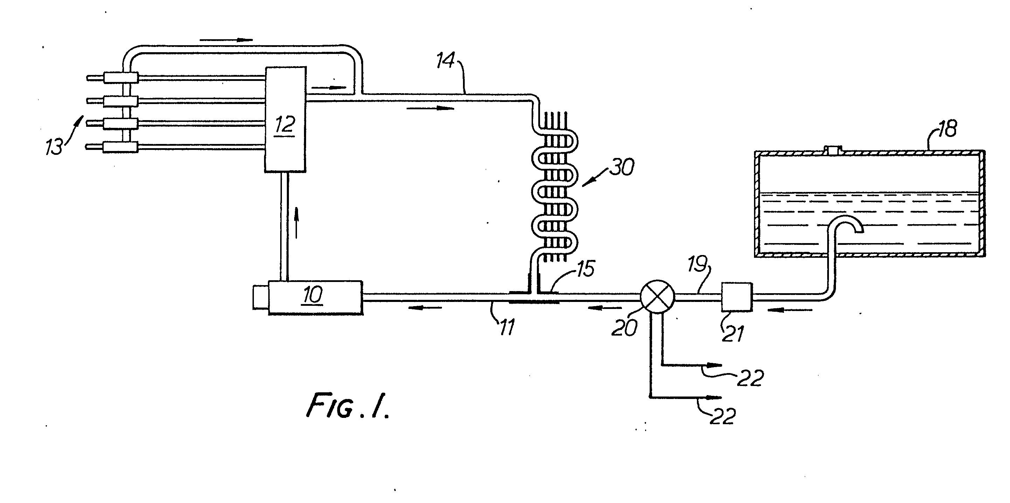

Referring to Figure 1, the part of the system similar to that of a conventional fuel injection system will first be described. Referring to the drawing, a fuel pump 10 draws fuel from a supply line 11 to a fuel distributor or pressure regulator device 12 and thence to the fuel injectors 13 of the engine. The injectors 13 may be solenoid operated, in which case device 12 will be a fuel pressure regulator. Alternatively, device 12 may be a fuel distributor, and each injector 13 will include a one-way valve opening at a preset pressure. A fuel return line 14 provides a return path for excess fuel not distributed by device 12. In a diesel injection system, further components would be provided, such as a lift or pre-supply pump to feed fuel pump 10, and a fuel return line as
shown from each injector communicating with the main
return line 14. In a conventional system, the fuel
supply line 11 would be connected to the fuel tank
of the vehicle or other apparatus and likewise the return
line 14 would be arranged to feed excess fuel back into
the tank.

However, as shown, the present arrangement has the
return line 14 connected by means of a T-piece 15 to the
supply line 11, the connection being made downstream of
the pump 10. A main tank 18 supplies fuel to the fuel pump
10 by way of a fuel line 19 which includes a flow sensor
20 and may include a fuel filter 21. The flow sensor
20 is shown as including conductors 22 for transmitting
flow-responsive signals to suitable processing equipment.

So as to cool the excess fuel and prevent the above-
mentioned vapour lock problem, the return line 14 includes
a cooling means in the form of a radiator 30. The radiator
should be mounted in a position where it is subjected
to a throughflow of cooling air, e.g. in a motor vehicle
it may be positioned in front of the coolant radiator,
the radiator fan drawing cooling air through the radiator.

In operation, fuel is drawn from the main tank
18 by way of fuel line 19 and via the flow sensor 20.
A lift or pre-supply pump may be provided for this purpose,
e.g. at the outlet of the main tank 18; alternatively suction
from the supply line 11 as a result of operation of the
fuel pump 10 will generally be sufficient to cause
flow of fuel from the main tank 18. The remainder of
the system operates in the conventional manner except
that fuel is returned to the T-piece 15 in the supply line
11 by way of the radiator 30 rather than to the main tank.
It will be seen that fuel flow measured by the sensor 20
accurately reflects the true consumption of the engine.

Since the fuel is cooled each time it completes a
circuit through the return line 14 and hence radiator 30,
the temperature of the circulating fuel is kept low
and hence vapour lock should not occur in the supply line 11.

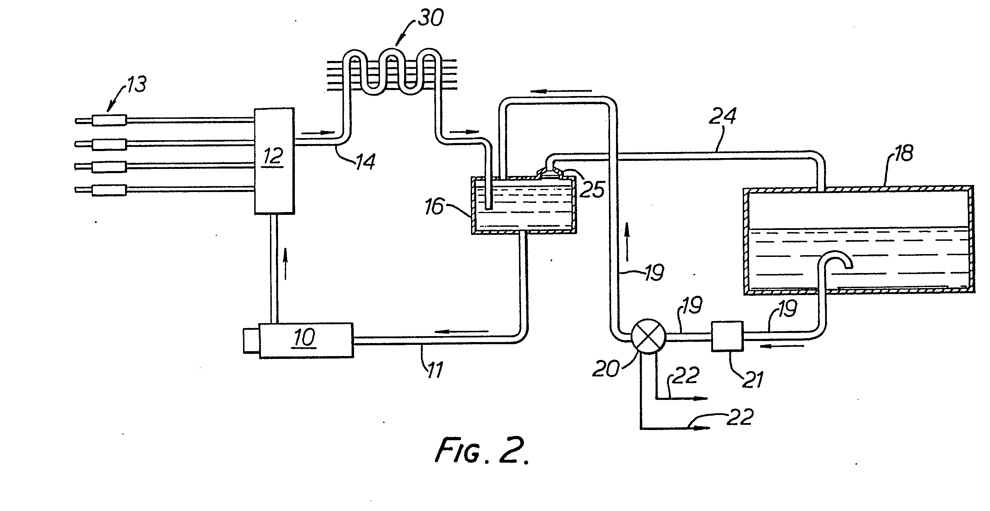

Figure 2 shows another embodiment of the invention, parts similar to those shown in Figure 1 having the same references. In this version instead of the direct connection between return line 14 and supply line 11, there is provided an intermediate container 16. The main tank 18 thus supplies fuel to the intermediate container 16 by way of fuel line 19 including the flow sensor 20. A vent pipe 24 incorporating a suitable valve 25 may be provided so that the intermediate container 16 may share a common venting arrangement (not shown) of the main tank 18. The system operates in similar manner to that of Figure 1 except that cooled fuel is return to the intermediate container 16 rather than to the T-piece 15 of Figure 1. Again it will be seen that fuel flow measured by the sensor 20. accurately reflects the true consumption of the engine.

The intermediate container 16 can itself act to cool the fuel returned via return line 14. It is envisaged that the radiator 30 and intermediate container 16 could be combined to provide a single cooling means.

For efficient operation, the size of the intermediate container shall be related to the specific fuel consumption of the engine. It is believed that a capacity of one litre is suitable for engine sizes generally fitted to motor vehicles. Generally, the intermediate container should be large enough to cope with maximum fuel flow demanded by the engine, but small enough to ensure quick response of the sensor 20.

Where a vent pipe is fitted as shown at 24, the valve 25 should be suitable for outflow of vapour from the intermediate container 16. However, it should neither interefere with any vacuum effect in the container which may be necessary for suction of fuel from the main tank, nor should it allow fuel to return to the main tank, otherwise the measurements obtained by the flow sensor 20 will be inaccurate.

Although fuel line 19 is shown as entering intermediate
tank 16 at the top, a side entry may alternatively be
provided.

Any suitable arrangement may be used as the flow
sensor 20, but the generally preferred device is a flow
transducer as disclosed in co-pending European Patent
Application No. 81301889.2.

0043283

- 7 -

CLAIMS:

1. A fuel injection system for an internal combustion engine provided with means for monitoring the fuel consumption thereof, comprising a fuel tank for storing fuel, at least one fuel injector for injecting fuel into a respective cylinder of the engine, a distributing means for supplying fuel·to the fuel injector at a predetermined point in the cycle of the engine, a fuel pump for pumping fuel along a fuel feed path from the fuel tank to the distributing means, and a fuel return path for returning excess fuel from at least the distributing means;

characterised in that a flow sensor is provided in the fuel feed path between the fuel tank and the fuel pump for providing an indication of fuel flow, in that the fuel return path rejoins the fuel feed path between the flow sensor and the fuel pump, and in that a cooling means is provided in the fuel return path, whereby cooled excess fuel is returned to the fuel feed path downstream of the flow sensor.

2. A system as claimed in claim 1, characterised in that said cooling means is a radiator.

3. A system as claimed in claim 1 or 2, and provided in a motor vehicle having a water-cooled internal combustion engine, characterised in that the fuel radiator is positioned in front of the coolant radiator of the engine.

4. A system as calimed in claim 1, 2 or 3, characterised in that a 'T' connection is provided in the fuel feed path betweeen the flow sensor and the fuel pump, the fuel return path being connected to a branch of the 'T' connection.

5. A system as claimed in claim 1, 2 or 3 characterised in that an intermediate fuel container is provided in the fuel feed path between the flow sensor and the fuel pump, the fuel return path being arranged to return excess fuel into the intermediate container.

6. A system as claimed in claim 5, characterised in that the intermediate container additionally acts to cool the fuel returned from the fuel return path.

7. A system as claimed in claim 5 or 6, characterised in that a vent pipe is fitted between the intermediate container and the fuel tank.

FIG. I.

0043283

FIG. 2.

0043283